# EUROPÄISCHE PATENTSCHRIFT

(11) **EP 1 420 192 B1**
(45) Veröffentlichungstag und Bekanntmachung des Hinweises auf die Patenterteilung: **14.02.2007**
(21) Anmeldenummer: 03022993.4
(22) Anmeldetag: 10.10.2003
(51) Int. Cl.: F16H 7/12

(54) **Spannvorrichtung für einen Hülltrieb eines Aggregates**
Tensioning device for a transmission with endless flexible member of an auxiliary apparatus
Dispositif tendeur pour une transmission à organe flexible sans fin d'un appareil auxiliaire

(30) Priorität: 16.11.2002 DE 10253450
(43) Veröffentlichungstag der Anmeldung: 19.05.2004
(73) Patentinhaber: Bayerische Motoren Werke Aktiengesellschaft, 80809 München (DE)
(72) Erfinder: Lemberger, Heinz, 85774 Unterföhring (DE); Jungjohann, Rainhardt, 83620 Feldkirchen (DE)

(56) Entgegenhaltungen:
- EP-A- 1 236 931
- WO-A-00/77422
- WO-A-20/04042253
- DE-A1- 19 926 647
- US-A- 4 416 647
- US-A- 4 758 208

## Beschreibung

Die Erfindung bezieht sich auf eine Spannvorrichtung für einen Hülltrieb eines Antriebsaggregates, insbesondere Riementrieb eines Starter-Generators einer Brennkraftmaschine, wobei die an einem Gehäuse des Aggregates angeordnete Spannvorrichtung um eine gemeinsame Drehachse gegen die Wirkung einer Feder verschwenkbare Spannarme für Spannrollen zur jeweiligen Anlage am wechselnden Zugtrum und Leertrum des Hülltriebes umfasst.

Eine Spannvorrichtung der Bauart mit den vorgenannten Merkmalen ist z.B. aus der US 4 758 208 bekannt für den Riementrieb einer Starter-Generator-Anordnung, wobei die Spannrollen tragenden Spannarme auf einem zur Generatorwelle koaxialen Fortsatz an der Stirnseite des Starter-Generator-Gehäuses schwenkbeweglich gelagert und mittels einer den Fortsatz umschließend angeordneten Schraubendrehfeder bzw. Schenkelfeder relativ zueinander in V-förmiger, belastungsabhängig veränderlicher Position gehalten sind. Des weiteren ist das Generator-Gehäuse unter der Wirkung wechselnder Antriebsmomente begrenzt drehwinkelbeweglich relativ zur Brennkraftmaschine angeordnet zur Steuerung eines Gesperres, das mit an den Spannarmen vorgesehenen Verzahnungen derart zusammenwirkt, dass jeweils der Spannarm mit der auf das Zugtrum einwirkenden Spannrolle fixiert ist und lediglich der Spannarm mit der am Leertrum wirksamen Spannrolle schwenkbeweglich ist.

Nachteilig bei dieser bekannten Spannvorrichtung ist die bauaufwändige Gestaltung des Generator-Gehäuses sowie die Fixierung der jeweiligen Zugtrum-Spannrolle.

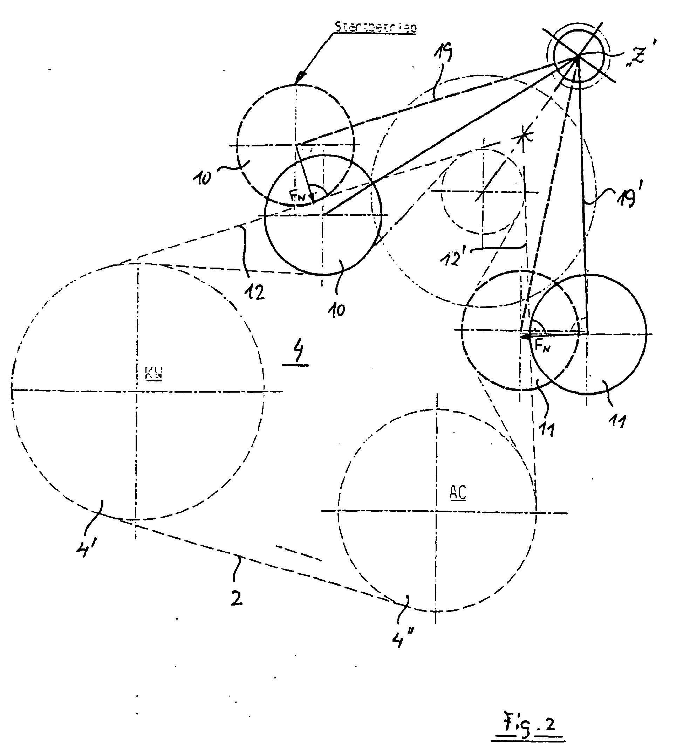

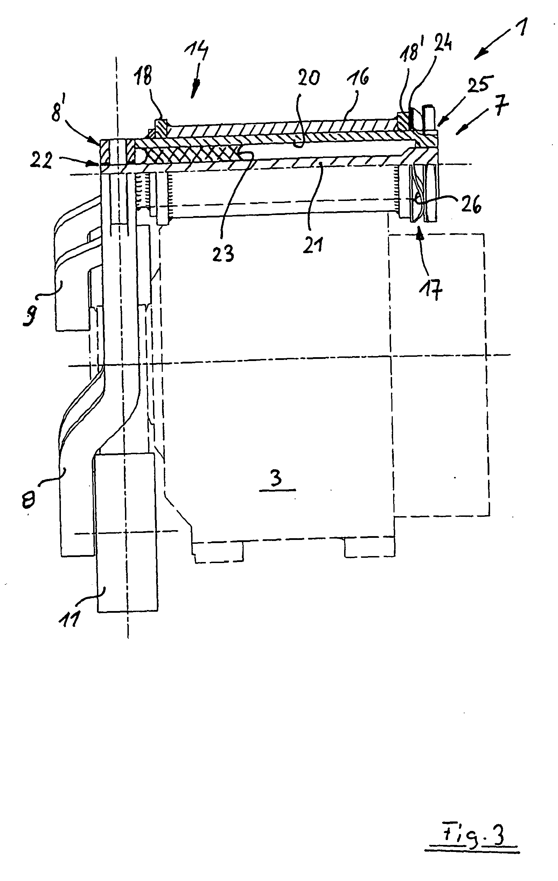

Ferner ist aus der DE 199 26 615 A1 eine gattungsgemäße Spannvorrichtung mit einem diesbezüglich mit dem Gegenstand der oben genannten US 4 758 208 vergleichbaren Aufbau bekannt, wobei zur Vermeidung eines am Generator-Gehäuses angeordneten Fortsatzes dieser gemäß den Beispielen der Figuren 4 und 5 an einem gesonderten Flansch zum stirnseitigen Anschluss am Generator-Gehäuse ausgebildet ist. Nachteilig hierbei ist der stirnseitig des Starter-Generators erforderliche Bauraum für die Spannvorrichtung.
Schließlich ist aus gattungsfremden DE-Osen 4001689 und 4345150 jeweils ein Riemenspanner mit einer Drehstabfeder bekannt.

Der Erfindung liegt die Aufgabe zugrunde, eine gattungsgemäße Spannvorrichtung von geringerem Platzbedarf bzw. Bauraum aufzuzeigen.

Diese Aufgabe ist mit dem Patentanspruch 1 dadurch gelöst, dass die Spannvorrichtung ein am Außenumfang des Aggregat-Gehäuses angeordnetes Tragteil umfasst mit einer zur Aggregat-Welle parallel gerichteten Lagerbuchse, die der Lagerung einer mit den Spannarmen drehfest verbundenen Torsionsfedereinrichtung dient, die in die Lagerbuchse eingeschoben einerseits gegen diese oder das Tragteil anschlägt und die andererseits mittels einer beim Wechsel von Zugtrum auf Leertrum wirksamen Dämpfungseinrichtung in der Lagerbuchse gesichert drehbeweglich gehalten ist.

Mit der erfindungsgemäß abschnittsweisen Nutzung des Gehäuse-Außenumfanges zur Anordnung eines die federbelasteten Spannarme tragenden Tragteils ist in Verbindung mit einer eine Torsionsfeder aufweisenden Einrichtung zur Steuerung V-förmig vorgesehener Spannarme in vorteilhafter Weise eine Spannvorrichtung von geringem Platzbedarf bzw. Bauraum erzielt. Eine aufwändige Anpassung des Generator-Gehäuses ist mit der Erfindung nicht erforderlich.

Eine einfache Abwandlung des Generator-Gehäuses durch Anordnung zweier fluchtender Laschen mit Durchbrechungen ermöglicht es in Ausgestaltung der Erfindung am Aggregat-Gehäuse ein gesondert ausgebildetes Tragteil vorzusehen mit einer an Tragarmen angeordneten Lagerbuchse, deren mit der Drehachse der Spannarme identische Längsachse im Schnittpunkt zweier Hilfsgeraden liegt, die zum jeweiligen Zugtrum des Hülltriebe im Abstand des halben Durchmessers der Spannrollen parallel angeordnet sind.

Mit dieser Ausgestaltung kann ein dem Starter-Generator eng benachbarter Bauraum vorteilhaft genutzt werden. Weiter vorteilhaft ist, dass auf das jeweilige Zugtrum die entsprechende Spannrolle aufgrund der erfindungsgemäß festgelegten Spannarm-Drehachse quergerichtet einwirkt auf das dem jeweiligen Antriebsrad tangential zugeführte Zugtrum.

Anstelle des gesonderten Tragteils kann am Aggregat-Gehäuse auch ein integriertes Auge als Tragteil einer Lagerbuchse dienen.

In weiterer Ausgestaltung der Erfindung ist eine im Aufbau besonders einfache Torsionsfedereinrichtung dadurch erzielt, dass diese ein mit einem der Spannarme drehfest verbundenes und in der Lagerbuchse drehbar gelagertes Rohr umfasst, das im spannarmfernen Endbereich drehfest verbunden ist mit einer im Rohr angeordneten Torsionsfeder, die im anderen Endabschnitt mit dem anderen Spannarm drehfest zusammenwirkt.

Eine einfache relative Lagesicherung der beiden Spannarme zueinander ist ferner dadurch erreicht, dass der mit der Torsionsfeder drehfest verbundene Spannarm in einem gabelartigen Endabschnitt des anderen Spannarmes mit Spiel angeordnet ist, wobei der mit dem Torsionsfeder-Rohr drehfest verbundene Spannarm-Endabschnitt mit auf einen freien Durchgang der Torsionsfeder abgestellten Durchbrechungen versehen ist.

Vorteilhaft für die Erzielung einer Spannvorrichtung von geringem Platzbedarf ist, dass die Torsionsfeder eine zylindrische Drehstabfeder oder eine aus geschichteten Federblechstreifen gebildete Drehstabfeder ist, wobei die jeweilige Drehstabfeder zur Dämpfung der Spannrollen tragenden Spannarme mit der Innenwandung des Rohres über eine gummielastische Drehschubfeder in Verbindung steht zur sogenannten inneren Dämpfung der Spannvorrichtung.

Gemäß einer anderen Gestaltung ist die Torsionsfeder eine Schraubenfeder, deren bei Torsionsbeanspruchung sich aufweitende Windungen mit der Innenwandung des Rohres reibschlüssig zwecks innerer Dämpfung zusammenwirken.

Im Rahmen der Erfindung mit dem Ziel einer Spannvorrichtung von geringem Platzbedarf ist von weiterem Vorteil, dass die bei Lastwechsel im Hülltrieb wirksame äußere Dämpfungseinrichtung eine am spannarmfernen Tragarm des Tragteils anliegende Reibscheibe aufweist, die mittels einer über eine mit dem Tosionsfeder-Rohr zusammenwirkenden Verschraubung vorgespannten Wellscheibe beaufschlagt ist.

Schließlich ermöglicht die erfindungsgemäße Spannvorrichtung in vorteilhafter Weise, dass jeder Spannarm relativ zu seiner Spannrolle derart gekröpft ausgebildet ist, dass jeder Spannarm mit der Torsionsfedereinrichtung im wesentlichen frei von Biegemomenten zusammenwirkt.

Die Erfindung ist anhand eines in der Zeichnung dargestellten, bevorzugten Ausführungsbeispiels erläutert. Es zeigt
- Fig.1: eine Stirnansicht der erfindungsgemäßen Spannvorrichtung,
- Fig.2: ein System zur Ermittlung der Drehachse der V-förmig angeordneten Spannarme,
- Fig.3: eine Seitenansicht der Spannvorrichtung mit in einem Halbschnitt gezeigter Torsionsfedereinrichtung.

Eine Spannvorrichtung 1 für einen Hüll- bzw. Riementrieb 2 eines Starter-Generators 3 einer nicht näher dargestellten Brennkraftmaschine 4 mit einer kurbelwellenseitigen Antriebsscheibe 4' und einer Antriebsscheibe 4" eines Klimakompressors ist an einem Gehäuse 5 des Aggregates bzw. Generators 3 angeordnet. Die Spannvorrichtung 1 umfasst um eine gemeinsame Drehachse 6 gegen die Wirkung einer Feder 7 verschwenkbare Spannarme 8,9 für Spannrollen 10,11 zur jeweiligen Anlage am betriebsartbedingt wechselnden Zugtrum 12,12' und Leertrum 13,13' des Riementriebes 2.

Zur Erzielung einer erfindungsgemäß einen geringen Platzbedarf beanspruchenden Spannvorrichtung 1 umfasst diese ein am Außenumfang des Generator-Gehäuses 5 angeordnetes Tragteil 14 mit einer zur Generator-Welle 15 parallel gerichteten Lagerbuchse 16, die der Lagerung einer mit den Spannarmen 8,9 drehfest verbundenen Torsionsfedereinrichtung 7 dient. Diese schlägt beim Einschieben in die Lagerbuchse 16 einerseits gegen diese oder das Tragteil 14 an und ist andererseits mittels einer beim Wechsel von Zugtrum auf Leertrum und umgekehrt wirksamen Dämpfungseinrichtung 17 in der Lagerbuchse 16 gesichert drehbeweglich gehalten.

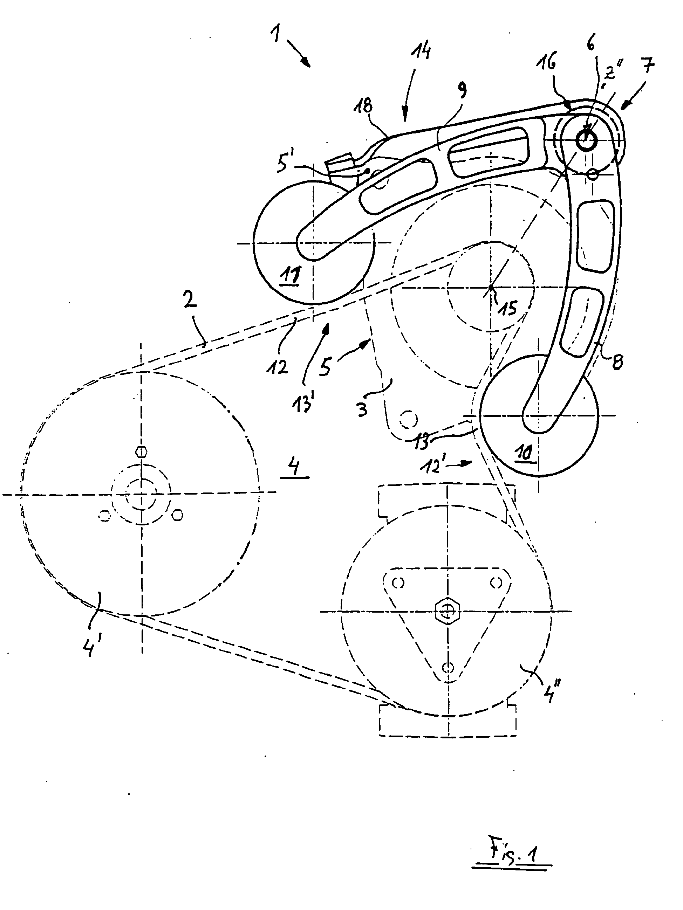

Bei am Aggregat- bzw. Generator-Gehäuse 5 bereits vorhandenen oder in einfacher Abwandlung des Gehäuses 5 nachträglich ausgebildeten, miteinander fluchtenden und Durchbrechungen aufweisenden Laschen 5' können diese der Anordnung eines gesondert ausgebildeten Tragteils 14 dienen, das an Tragarmen 18,18' angeordnet die Lagerbuchse 16 trägt. Deren Anordnung ist derart getroffen, dass die mit der Drehachse 6 der Spannarme 8,9 identische Buchsen-Längsachse im Schnittpunkt "Z" zweier Hilfsgeraden 19,19' liegt, die zum jeweils betriebartbedingten Zugtrum 12,12' des Hüll- bzw. Riementriebes 2 im Abstand des halben Durchmessers der Spannrollen 10,11 parallel angeordnet sind, wie aus Fig. 2 ersichtlich.

Eine nicht dargestellte Variante umfasst ein am Aggregat-Gehäuse 5 integriertes Auge als Tragteil einer Lagerbuchse, deren Längsachse ebenfalls im Schnittpunkt "Z" zweier, zum jeweiligen Zugtrum im Abstand der halben Spannrollen-Durchmesser angeordneter Parallelen liegt.

Wie Fig. 3 verdeutlicht, umfasst die Torsionsfedereinrichtung 7 ein mit dem Spannarm 8 drehfest verbundenes und in der Lagerbuchse 16 drehbar gelagertes Rohr 20, das im spannarmfernen Endbereich drehfest verbunden ist mit einer im Rohr 20 angeordneten Torsionsfeder 21. Diese wirkt im anderen Endabschnitt mit dem weiteren Spannarm 9 drehfest zusammen. Weiter ist aus Fig.3 ersichtlich, dass der mit der Torsionsfeder 21 drehfest verbundene Spannarm 9 in einem gabelartigen Endabschnitt 8' des anderen Spanarmes 8 mit Spiel angeordnet ist, wobei der mit dem Torsionsfeder-Rohr 20 drehfest verbundene Spannarm-Endabschnitt 8' mit auf freien Durchgang der Torsionsfeder 21 abgestellten Durchbrechungen 22 versehen ist.

Zur Erzielung eines bauraumgünstigen Durchmessers der Lagerbuchse 16 und des Torsionsfeder-Rohres 20 ist die Torsionsfeder 21 eine zylindrische Drehstabfeder oder eine aus geschichteten Federblattstreifen gebildete Drehstabfeder. Zur Erzielung einer inneren Dämpfung der Spannvorrichtung 1 mittels gedämpfter Spannarme 8,9 ist die jeweilige Torsions- bzw. Drehstabfeder 21 mit der Innenwandung des Torsionsfeder-Rohres 20 über eine gummielastische Drehschubfeder 23 verbunden.

Als Torsionsfeder 21 kann auch eine nicht gezeigte Schraubenfeder Verwendung finden, deren bei Torsionsbeanspruchung sich aufweitende Windungen mit der Innenwandung des Rohres 20 reibschlüssig zwecks innerer Dämpfung zusammenwirken.

Eine für einen betriebsartbedingten Einsatzwechsel der Spannarme 8,9 der Spannvorrichtung 1 zweckmäßige äußere Dämpfung ist dadurch erreicht, dass die bei Lastwechsel im Hüll- bzw. Riementrieb 2 wirksame äußere Dämpfungseinrichtung 17 eine am spannarmfernen Tragarm 18' anliegende Reibscheibe 24 aufweist, die mittels einer über eine mit dem Torsionsfeder-Rohr 20 zusammenwirkenden Verschraubung 25 vorgespannten Wellscheibe 26 beaufschlagt ist.

Eine den Bauaufwand reduzierende und die Betriebssicherheit der Spannvorrichtung 1 erhöhende Maßnahme ist schließlich dadurch erreicht, dass jeder Spannarm 8,9 relativ zu seiner Spannrolle 10,11 derart gekröpft ausgebildet ist, dass jeder Spannarm 8,9 mit der Torsionsfedereinrichtung 7 im wesentlichen biegemomentenfrei zusammenwirkt.

## Patentansprüche

1. Spannvorrichtung für einen Hülltrieb eines Aggregates, insbesondere Riementrieb eines Starter-Generators einer Brennkraftmaschine,
- wobei die an einem Gehäuse (5) des Aggregates (3) angeordnete Spannvorrichtung (1) um eine gemeinsame Drehachse (6) gegen die Wirkung einer Feder (7) verschwenkbare Spannarme (8,9) für Spannrollen (10,11) zur jeweiligen Anlage am wechselnden Zugtrum (12,12') und Leertrum (13,13') des Hülltriebes (2) umfasst,
- die Spannvorrichtung (1) ein am Außenumfang des Aggregat-Gehäuses (5) angeordnetes Tragteil (14) umfasst mit einer zur Aggregat-Welle (15) parallel gerichteten Lagerbuchse (16), die
- der Lagerung einer mit den Spannarmen (8,9) drehfest verbundenen Torsionsfedereinrichtung (7) dient, **dadurch gekennzeichnet, dass** die Torsionsfedereinrichtung (7)
- in die Lagerbuchse (16) eingeschoben einerseits gegen diese oder das Tragteil (14) anschlägt und die
- andererseits mittels einer beim Wechsel von Zugtrum (12,12') auf Leertrum (13,13') und umgekehrt wirksamen Dämpfungseinrichtung (17) in der Lagerbuchse (16) gesichert drehbeweglich gehalten ist.

2. Spannvorrichtung nach Anspruch 1, **dadurch gekennzeichnet,**
- **dass** am Aggregat-Gehäuse (5) ein gesondert ausgebildetes Tragteil (14) vorgesehen ist mit einer an Tragarmen (18,18') angeordneten Lagerbuchse (16), deren
- mit der Drehachse (6) der Spannarme (8,9) identische Längsachse im Schnittpunkt (Z) zweier Hilfsgeraden (19,19') liegt, die
- zum jeweiligen Zugtrum (12,12') des Hülltriebes (2) im Abstand des halben Durchmessers der Spannrollen (10,11) parallel angeordnet sind.

3. Spannvorrichtung nach Anspruch 1, **dadurch gekennzeichnet,**
- **dass** am Aggregat-Gehäuse (5) ein integriertes Auge als Tragteil einer Lagerbuchse vorgesehen ist, deren
- Längsachse im Schnittpunkt (Z) zweier, zum jeweiligen Zugtrum (12,12') im Abstand der halben Spannrollen-Durchmesser angeordneter Parallelen liegt.

4. Spannvorrichtung nach den Ansprüchen 1-3, **dadurch gekennzeichnet,**
- **dass** die Torsionsfedereinrichtung (7) ein mit einem der Spannarme (8) drehfest verbundenes und in der Lagerbuchse (16) drehbar gelagertes Rohr (20) umfasst, das
- im spannarmfernen Endbereich drehfest verbunden ist mit einer im Rohr (20) angeordneten Torsionsfeder (21), die
- im anderen Endabschnitt mit dem anderen Spannarm (9) drehfest zusammenwirkt.

5. Spannvorrichtung nach Anspruch 4, **dadurch gekennzeichnet,**
- **dass** der mit der Torsionsfeder (21) drehfest verbundene Spannarm (9) in einem gabelartigen Endabschnitt (8') des anderen Spannarmes (8) mit Spiel angeordnet ist, wobei
- der mit dem Torsionsfeder-Rohr (20) drehfest verbundene Spann-arm-Endabschnitt (8') mit auf einen freien Durchgang der Torsionsfeder (21) abgestellten Durchbrechungen (22) versehen ist.

6. Spannvorrichtung nach den Ansprüchen 1-5, **dadurch gekennzeichnet,**
- **dass** die Torsionsfeder (21) eine zylindrische Drehstabfeder oder eine aus geschichteten Federblechstreifen gebildete Drehstabfeder ist, wobei
- die jeweilige Drehstabfeder (21) zur Dämpfung der Spannarme (8, 9) mit der Innenwandung des Rohres (20) über eine gummielastische Drehschubfeder (23) in Verbindung steht.

7. Spannvorrichtung nach den Ansprüchen 1-5, **dadurch gekennzeichnet,**
- **dass** die Torsionsfeder (21) eine Schraubenfeder ist deren
- bei Torsionsbeanspruchung sich aufweitende Windungen mit der Innenwandung des Rohres (20) reibschlüssig zwecks innerer Dämpfung zusammenwirken.

8. Spannvorrichtung nach den Ansprüchen 1-7, **dadurch gekennzeichnet,**
- **dass** die bei Lastwechsel im Hülltrieb (2) wirksame äußere Dämpfungseinrichtung (17) eine am spannarmfernen Tragarm (18') anliegende Reibscheibe (24) aufweist, die
- mittels einer über eine mit dem Rohr (20) zusammenwirkende Verschraubung (25) vorgespannten Wellscheibe (26) beaufschlagt Ist.

9. Spannvorrichtung nach den Ansprüchen 1-8, **dadurch gekennzeichnet,**
- **dass** jeder Spannarm (8,9) relativ zu seiner Spannrolle (10,11) derart gekröpft ausgebildet ist, dass
- jeder Spannarm (8,9) mit der Torsionsfedereinrichtung (7) im wesentlichen biegemomentenfrei zusammenwirkt.

## Claims

1. A tensioning device for an encompassing drive of a unit, especially a belt drive of a starter generator of an internal-combustion engine,
- wherein the tensioning device (1) arranged on a housing (5) of the unit (3) comprises tensioning arms (8, 9) which can be pivoted about a common axis of rotation (6) against the action of a spring (7) for tensioning rollers (10, 11), for respective contact on the changing taut side (12, 12') and slack side (13, 13') of the encompassing drive (2),
- the tensioning device (1) comprises a support part (14) arranged at the outer periphery of the unit housing (5), with a bearing bush (16) directed parallel to the unit shaft (15), in which
- bearing bush is used for mounting a torsion spring mechanism (7) connected in a rotationally engaged manner to the tensioning arms (8, 9), **characterised in that** the torsion spring mechanism (7),
- inserted into the bearing bush (16), on the one hand, strikes against the latter or the support part (14) and
- is held, on the other hand, so as to be rotationally movable, secured in the bearing bush (16), by means of a damping mechanism (17) which is effective when changing from the taut side (12, 12') to the slack side (13, 13') and vice versa.

2. A tensioning device according to claim 1, **characterised in that**
- a separately formed support part (14) is provided on the unit housing (5), comprising a bearing bush (16) arranged on support arms (18, 18'), of which
- the longitudinal axis that is identical to the axis of rotation (6) of the tensioning arms (8, 9) lies at the point of intersection (Z) of two auxiliary straight lines (19, 19'), which
- are arranged parallel to the respective taut side (12, 12') of the encompassing drive (2) at a spacing of half the diameter of the tensioning rollers (10, 11).

3. A tensioning device according to claim 1, **characterised in that**
- an integrated eye is provided on the unit housing (5) as a support part of a bearing bush, of which
- the longitudinal axis lies at the point of intersection (Z) of two parallel lines arranged with respect to the respective taut side (12, 12') at a spacing of half the tensioning roller diameters.

4. A tensioning device according to claims 1 to 3, **characterised in that**
- the torsion spring mechanism (7) comprises a tube (20) which is connected in a rotationally engaged manner to one of the tensioning arms (8) and is rotatably mounted in the bearing bush (16), which tube
- is connected in a rotationally engaged manner in the end region remote from the tensioning arm to a torsion spring (21) which is arranged in the tube (20) and which
- cooperates in a rotationally engaged manner in the other end section with the other tensioning arm (9).

5. A tensioning device according to claim 4, **characterised in that**
- the tensioning arm (9) connected in a rotationally engaged manner to the torsion spring (21) is arranged in a fork-like end section (8') of the other tensioning arm (8) with play, wherein
- the tensioning arm end section (8') that is connected in a rotationally engaged manner to the torsion spring tube (20) is provided with openings (22) intended for free through-passage of the torsion spring (21).

6. A tensioning device according to claims 1 to 5, **characterised in that**
- the torsion spring (21) is a cylindrical torsion bar spring or a torsion bar spring formed from spring steel sheet strips, wherein
- the respective torsion bar spring (21), to damp the tensioning arms (8, 9), is connected to the inner wall of the tube (20) via a rubber-elastic turning and sliding spring (23).

7. A tensioning device according to claims 1 to 5, **characterised in that**
- the torsion spring (21) is a helical spring, of which
- the turns widening on torsional loading cooperate with frictional engagement with the inner wall of the tube (20) for the purpose of inner damping.

8. A tensioning device according to claims 1 to 7, **characterised in that**
- the outer damping mechanism (17) that is effective in the event of a load change in the encompassing drive (2) has a friction disc (24) which rests on the support arm (18') remote from the tensioning arm and which
- is loaded by means of a corrugated washer (26) prestressed via a screwing device (25) cooperating with the tube (20).

9. A tensioning device according to claims 1 to 8, **characterised in that**
- each tensioning arm (8, 9) is bent relative to a tensioning roller (10, 11) in such a way that
- each tensioning arm (8, 9) cooperates substantially free of bending moment with the torsion spring mechanism (7).

## Revendications

1. Dispositif tendeur pour une transmission à organe flexible en particulier par courroie d'un générateur de démarrage d'un moteur à combustion interne, pour lequel :
- le dispositif tendeur (1) disposé sur un boîtier (5) de l'appareil auxiliaire (3) comprend des bras tendeurs (8, 9) pivotant autour d'un axe de rotation (6) commun à l'encontre de l'effet d'un ressort (7) pour des galets tendeurs (10, 11) pour l'application respective contre le brin tracté (12, 12') et le brin lâché (13, 13') de la transmission à organe flexible (2), en fonction du mode de fonctionnement,
- le dispositif tendeur (1) comprend un support (14) disposé sur la périphérie extérieure du boîtier de générateur (5) avec un coussinet (16) orienté parallèlement à l'arbre de générateur (15), et qui
- sert à loger un dispositif de ressort de torsion (7) solidaire en rotation avec les bras tendeurs (8, 9),
**caractérisé en ce que**
le dispositif de ressort de torsion (7)
- lors de l'introduction dans le coussinet (16) d'une part bute contre celui-ci ou le support (14), et
- d'autre part est maintenu mobile en rotation dans le coussinet (16) au moyen d'un dispositif d'amortissement (17) agissant lors du changement entre le brin tracté (12, 12') et le brin lâché (13, 13') et inversement.

2. Dispositif tendeur selon la revendication 1,
**caractérisé en ce que**
- sur le boîtier d'appareil auxiliaire (5) un support (14) distinct est prévu avec un coussinet (16) disposé sur des bras porteurs (18, 18'), dont
- l'axe longitudinal identique à l'axe de rotation (6) des bras tendeurs (8, 9) se situe dans le point d'intersection (Z) de deux droites secondaires (19, 19'), qui
- sont parallèles au brin tracté (12, 12') respectif de la transmission à organe flexible (2) à une distance de la moitié du diamètre des galets tendeurs (10, 11).

3. Dispositif tendeur selon la revendication 1,
**caractérisé en ce que**
- sur le boîtier d'appareil auxiliaire (5) un oeillet est intégré, et sert de support pour un coussinet,
- dont l'axe longitudinal se situe dans le point d'intersection (Z) de deux parallèles écartées de la moitié du diamètre des galets tendeurs par rapport au centre respectif.

4. Dispositif tendeur selon les revendications 1 à 3,
**caractérisé en ce que**
- le dispositif de ressort de torsion (7) comprend un tube (20) solidaire en rotation avec un des bras tendeurs (8) et logé en rotation dans le coussinet (16), qui
- dans la zone terminale éloignée du bras tendeur est solidaire en rotation avec un ressort de torsion (21) disposé dans le tube (20), et
- dans l'autre segment terminal le ressort coopère en rotation avec l'autre bras tendeur (9).

5. Dispositif tendeur selon la revendication 4,
**caractérisé en ce que**
- le bras tendeur (9) solidaire en rotation avec le ressort de torsion (21) est disposé avec du jeu dans un segment terminal (8') en forme de fourche de l'autre bras tendeur (8),
- le segment terminal du bras tendeur (8') solidaire en rotation avec le tube de ressort de torsion (20) étant muni de perçages (22) pour laisser passer librement le ressort de torsion (21).

6. Dispositif tendeur selon les revendications 1 à 5,
**caractérisé en ce que**
- le ressort de torsion (21) est un ressort à barre de torsion cylindrique ou un ressort à barre de torsion formé à partir de bandes de tôle à ressorts empilées,
- le ressort à barre de torsion (21) respectif étant relié à la paroi intérieure du tube (20) par un ressort articulé cylindrique (23) en gomme élastique pour amortir les bras tendeurs (8, 9).

7. Dispositif tendeur selon les revendications 1 à 5,
**caractérisé en ce que**
- le ressort de torsion (21) est un ressort hélicoïdal dont
- les spires s'évasant lors d'une torsion coopèrent avec la paroi intérieure du tube (20) par friction pour l'amortissement intérieur.

8. Dispositif tendeur selon les revendications 1 à 7,
**caractérisé en ce que**
- le dispositif d'amortissement extérieur 17 agissant lors d'un changement de charge dans la transmission à organe flexible (2) présente un disque de friction (24) appliqué contre le bras porteur (18') éloigné du bras tendeur, et qui
- est sollicité par une rondelle ondulée (26) précontrainte par un vissage (25) coopérant avec le tube (20).

9. Dispositif tendeur selon les revendications 1 à 8,
**caractérisé en ce que**
- chaque bras tendeur (8, 9) présente une forme coudée par rapport à son galet tendeur (10, 11) de sorte que
- chaque bras tendeur (8, 9) coopère avec le dispositif de ressort de torsion (7) essentiellement sans couples de flexion.
